(19) Europäisches Patentamt
European Patent Office
Office européen des brevets

(11) EP 1 614 316 B1

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(21) Anmeldenummer: **04722288.0**

(22) Anmeldetag: **22.03.2004**

(51) Int Cl.:
***H04W 4/06*** *(2009.01)*

(86) Internationale Anmeldenummer:
**PCT/EP2004/003025**

(87) Internationale Veröffentlichungsnummer:
**WO 2004/091240 (21.10.2004 Gazette 2004/43)**

(54) **VERFAHREN UND ENTSPRECHENDE MOBILFUNKANORDNUNG ZUM ÜBERTRAGEN VON ORTSBEZOGENEN DIENST-INFORMATIONEN**

METHOD AND CORRESPONDING MOBLE RADIO DEVICE FOR THE TRANSMISSION OF LOCATION-RELATED SERVICE INFORMATION

PROCEDE ET DISPOSITIF MOBILE RADIO CORRESPONDANT DE TRANSMISSION D'INFORMATIONS DE SERVICE RELATIVES A UN LIEU

(84) Benannte Vertragsstaaten:
**DE FR GB**

(30) Priorität: **14.04.2003 DE 10317143**

(43) Veröffentlichungstag der Anmeldung:
**11.01.2006 Patentblatt 2006/02**

(73) Patentinhaber: **SIEMENS AKTIENGESELLSCHAFT**
**80333 München (DE)**

(72) Erfinder:
- **BECKMANN, Mark**
  **38124 Braunschweig (DE)**
- **ECKERT, Michael**
  **38122 Braunschweig (DE)**
- **GOTTSCHALK, Thomas**
  **12524 Berlin (DE)**
- **SCHMIDT, Gunnar**
  **78052 Villingen-Schwenningen (DE)**

(56) Entgegenhaltungen:
**EP-A- 1 213 939**
**WO-A-01/01711**
**US-A1- 2003 003 909**
**US-A1- 2003 045 314**
**US-B1- 6 529 740**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 614 316 B1

## Beschreibung

In Mobilfunksystemen gibt es verschiedene Dienste, welche Informationen bereitstellen, die nur von lokalem Interesse sind. Das bedeutet, die Informationen, die mittels dieser Dienste bzw. Datendienste übertragen werden, sind nur für Mobilstationen, wie beispielsweise Mobiltelefone, an einem bestimmten Aufenthaltsort relevant. Dienste, die Informationen bereitstellen, welche nur an einem bestimmten geografischen Gebiet relevant sind, werden auch als ortsbezogene Dienste bzw. "location services" (LCS) bezeichnet.

In Mobilfunknetzwerken bzw. Mobilfunkzellen können Dienst-Informationen von mehreren ortsbezogenen Diensten (LCS) von einer Basisstation an alle Mobilstationen innerhalb der Funkzelle ausgesendet bzw. "gebroadcastet" werden. Diese Dienst-Informationen sind in der ganzen Funkzelle und für alle Mobilstationen gleichermaßen gültig. Es sei bemerkt, dass mit dem Begriff Dienst-Informationen bzw. "Service-Informationen" alle Informationen gemeint sind, die von einem ortsbezogenen Dienst bereitgestellt werden. Das können sowohl Steuerdaten, welche beispielsweise für den Empfang und die Aufrechterhaltung des Dienstes bzw. Datendienstes nötig sind, als auch die eigentlichen Nutzdaten des Dienstes sein.

Als nachteilig bei herkömmlichen Diensten bzw. bei der Übertragung von Dienst-Informationen stellt sich heraus, dass Mobilstationen, die sich für einen bestimmten ortsbezogenen Dienst interessieren, auch die Dienst-Informationen aller anderen ortsbezogenen Dienste empfangen müssen und erst nach einer Auswertung der empfangenen Dienst-Informationen entscheiden können, welche der Informationen für sie interessant sind und weiterverarbeitet werden müssen, und welche Informationen irrelevant sind. Dabei ist der Signalverarbeitungsaufwand einer Mobilstation unnötig erhöht, wodurch auf Grund des unnötigen Stromverbrauchs auch die Standzeit der Batterie verkürzt wird.

In US 6 529 740 B1 ist ein Verfahren zur Übertragung von Daten in einem zellularen Mobilfunksystem beschrieben, wobei Satelliten als Basisstationen dienen. Zur Übertragung der Signale zwischen den Satelliten und den Mobilstationen werden Funkkanäle bereitgestellt. Da sich die Satelliten ständig bewegen, werden die Mobilstationen mittels einer Kanalliste darüber informiert, zu welchen Zeiten welche Funkkanäle zur Verfügung stehen. Dazu ermittelt jede Mobilstation ihren Aufenthaltsort und entnimmt der Kanalliste entsprechende Informationen darüber, wann an ihrem Aufenthaltsort für welche Dauer welcher Funkkanal verfügbar ist.

In US 2003/0003909 A1 ist ein Verfahren zur Übertragung von ortsbezogenen Dienst-Daten in einem Mobilfunknetz von einer Basisstation zu einer Mobilstation angegeben. Der Mobilstation werden ihr Aufenthaltsort sowie Informationen mit Identifikationsdaten von Dienstanbietern mitgeteilt, worauf die Mobilstation die für ihren Aufenthaltsort relevanten Dienst-Daten von einem entsprechenden Dienstanbieter abfragen kann.

Es ist somit die Aufgabe der vorliegenden Erfindung, eine Möglichkeit zur Übertragung von ortsbezogenen Dienst-Informationen in einer Mobilfunkzelle zu schaffen, bei der der Signalverarbeitungsaufwand in einer Mobilstationen minimiert ist.

Diese Aufgabe wird durch ein Verfahren gemäß Anspruch 1 sowie eine Mobilfunkanordnung gemäß Anspruch 8 gelöst. Vorteilhafte Ausgestaltungen sind Gegenstand der Unteransprüche.

Gemäß einem ersten Aspekt der Erfindung wird dabei ein Verfahren vorgeschlagen, das es Mobilstationen ermöglicht, in Abhängigkeit von ihrem Aufenthaltsort Teile von Dienst-Daten, welche eine Mehrzahl von Dienst-Informationen umfassen, auslesen zu können. Das bedeutet, es sollen nur diejenigen Dienst-Informationen der ortsbezogenen Dienste bzw. Datendienste (LCS) ausgelesen werden, die am eigentlichen Aufenthaltsort einer Mobilstation relevant sind.

Genauer gesagt können bei einem derartigen Verfahren Dienst-Daten in einem Mobilfunknetz von einer Basisstation zu einer Mobilstation folgendermaßen übertragen werden. Die Mobilstation ermittelt ihren momentanen Aufenthaltsort, d. h. das geografische Gebiet, in dem sie sich augenblicklich aufhält. Ferner werden Dienst-Daten von der Basisstation zu der Mobilstation übertragen. Diese Dienst-Daten umfassen eine Mehrzahl von ortsbezogenen Dienst-Informationen, welche jeweils einem bestimmten geografischen Gebiet zugeordnet sind, wobei die jeweiligen ortsbezogenen Dienst-Informationen in einer vorbestimmten zeitlichen Struktur zusammen mit einer diese zeitliche Struktur der Dienst-Informationen beschreibenden Planungs-Information übertragen werden, wobei die Planungs-Information und die ortsbezogenen Dienst-Informationen zeitlich aufeinander folgend in den Dienst-Daten vorgesehen sind und jeweils ein vorbestimmtes Übertragungsintervall umfassen. Anschließend wird die in den Dienst-Daten übertragene Planungs-Information von der Mobilstation analysiert und werden diejenigen ortsbezogenen Dienst-Informationen empfangen bzw. verarbeitet, die dem geografischen Gebiet, in dem sich der ermittelte Aufenthaltsort der Mobilstation befindet, zugeordnet sind. Durch dieses Vorsehen einer Planungs-Information in den Dienst-Daten kann eine Mobilstation somit durch Auslesen der Planungs-Information feststellen, zu welchem Zeitpunkt in der zeitlichen Struktur der Dienst-Daten die für die Mobilstation relevanten Dienst-Informationen vorgesehen sind bzw. gesendet werden, so dass die Mobilstation gezielt nur die für sie relevanten Informationen empfangen bzw. auslesen und verarbeiten braucht. Auf diese Weise wird somit der Signalverarbeitungsaufwand der Mobilstation minimiert und somit auch der Stromverbrauch, wodurch die Batteriestandzeit verlängert wird.

Gemäß einer vorteilhaften Ausgestaltung wird der momentane Aufenthaltsort der Mobilstation mittels einer satellitengestützten Positionserfassung, wie über das globale Positionierungssystem GPS, bestimmt. Dazu kann die Mobilstation ein GPS(Global Positioning System)-Modul aufweisen. Das bei dem GPS angewandte Ortsbestimmungsverfahren beruht auf dem Prinzip der Entfernungsbestimmung durch Messung der Laufzeit von Signalen zwischen dem GPS-Modul und je einem von mehreren Bezugspunkten (hier Satelliten), deren Positionen genau bekannt sind. Genauer gesagt, wird ein Messsignal hierbei von einem Satelliten (Bezugspunkt) erzeugt, ausgestrahlt und nach Durchlaufen der zu messenden Strecken von dem GPS-Modul empfangen. Die Genauigkeit der Positionsbestimmung hängt dabei von der Genauigkeit der Entfernungsmessung ab und diese wiederum von der Genauigkeit der zur Verfügung stehenden Uhrzeit bzw. Zeitbasis.

Gemessen wird die Laufzeit auf Grund der momentanen Uhrzeiten (Zeitstempel) bei Ausstrahlung des Signals im Satelliten und bei Empfang durch das GPS-Modul. Eine genaue Zeitmessung setzt voraus, dass die Uhren beim GPS-Modul und in den Satelliten synchron mit hoher Genauigkeit laufen. Ein Zeitunterschied beispielsweise von einer Mikrosekunde ergibt einen Entfernungsfehler von 300 Metern. Derartige Genauigkeiten lassen sich nur mittels Atomfrequenz normal erzielen. Wegen des technischen Aufwands und der Kosten ist der im Einsatz nur im Satelliten und nicht in den GPS-Modulen möglich. Um die bei der Verwendung weniger genauer Uhren, beispielsweise quarzstabilisierte Oszillatoren, in einem GPS-Modul auftretende Zeitabweichung und damit entsprechende Entfernungsfehler zu eliminieren, wird bei dem GPS eine Zeitkorrektur vorgenommen, welche Bestandteil des Messvorgangs ist. Für diese Zeitkorrektur (Synchronisation der Empfänger- und Satelliten-Uhren) ist gewöhnlicher Weise ein vierter Satellit notwendig, während zur Positionsbestimmung des Ortes (im Raum) des GPS-Moduls prinzipiell drei Entfernungen zu drei Satelliten, deren Koordinaten bekannt sein müssen, zu messen sind.

Gemäß einer weiteren vorteilhaften Ausgestaltung der Erfindung kann die Bestimmung des momentanen Aufenthaltsorts der Mobilstation mittels eines Basisstations-Identifikationsverfahrens bzw. Feststations-Identifikationsverfahrens ermittelt werden. Dazu hat die Mobilstation ein Funkmodul zum Herstellen einer Funkverbindung (über eine Luftschnittstelle) mit zumindest einer entsprechenden Basisstation bzw. Feststation. Die Basisstation kann dabei die oben erwähnte Basisstation oder eine zweite Basisstation bzw. Feststation sein. Nach Herstellen der Funkverbindung kann die Basisstation bzw. Feststation ihre Kennung an das Funkmodul der Mobilstation übertragen, wodurch die Mobilstation nun weiß, mit welcher Basisstation bzw. Feststation sie verbunden ist und sie somit die geografische Lage der Basisstation bzw. Feststation ermitteln kann. Dieses auch als Basis- Lokalisierungsverfahren bezeichnete Verfahren ("Cell-ID") kann ferner dadurch verbessert werden, dass anhand einer Laufzeitmessung ("Timing Advance"- Messung) eines zwischen der Basisstation bzw. Feststation und dem Funkmodul der Mobilstation übertragenen Funksignals die Entfernung von der Basisstation zu dem Funkmodul berechnet wird. Somit kann der Standort des Funkmoduls bezüglich der Basisstation bzw. Feststation weiter präzisiert werden.

Eine verbesserte Bestimmung des momentanen Aufenthaltsorts einer Mobilstation in Bezug auf eine Basisstation bzw. Feststation kann auch anhand einer Intensitätsmessung eines von der Basisstation zu dem Funkmodul der Mobilstation übertragenen Funksignals erreicht werden, wobei mit abnehmender Entfernung zur Basisstation die Intensität des Funksignals abnimmt.

Des Weiteren kann der momentane Aufenthaltsort der Mobilstation mittels eines E-OTD(Enhanced Observed Time Difference)-Verfahrens ermittelt werden, bei dem E-OTD-Verfahren wird vorausgesetzt, dass die Mobilstation wieder ein Funkmodul aufweist, das in diesem Fall die Funksignale von zumindest drei Basisstation in einem Funknetz bzw. Mobilfunknetz empfangen kann. Das Funkmodul misst dann die Laufzeitunterschiede zwischen den Funksignalen der Basisstationen und meldet diese auf Anfrage insbesondere an ein sogenanntes SMLC (Serving Mobile Location Center). Da insbesondere im GSM-Netz jedoch keine Synchronisation gegeben ist, muss erst die Echtzeitdifferenz (Real Time Difference, RTD) zwischen den Basisstationen ermittelt werden. Dies geschieht durch eine sogenannte E-OTD-Location-Measurement-Unit (E-OTD LMU). Diese meldet den Wert ebenfalls an das SMLC, das dann die Position des Funkmoduls anhand der OTD- und RTD-Messungen sowie der Positionen der Basisstationen bestimmen kann.

Gemäß einer weiteren vorteilhaften Ausgestaltung kann der Zeitpunkt, an dem die Planungs-Information innerhalb der zeitlichen Struktur der Dienst-Daten von der Basisstation übertragen werden, gemäß folgender Formel berechnet werden:

$$t = t_x + (n + 1) \cdot M \cdot \Delta t ,$$

mit $t_x$ = Startzeitpunkt der Übertragung der Dienst-Daten, n = Anzahl der ortsbezogenen Dienst-Informationen innerhalb der Dienst-Daten (mit n = ganze Zahl von 1 bis $\infty$), M = der Zyklus der Übertragung der Planungs-Information und $\Delta t$ = das vorbestimmte Übertragungszeitintervall für die Planurigs- Information und die ortsbezogenen Dienst-Informationen.

Gemäß einer weiteren vorteilhaften Ausgestaltung werden die Planungs-Information und die ortsbezogenen Nutz- Informationen mit unterschiedlicher Sendeleistung von der Basisstation abgestrahlt. Dabei kann die Planungs-Information mit maximaler Sendeleistung abgestrahlt werden, während die ortsbezogenen Dienst-Informationen mit um so größerer Sendeleistung abgestrahlt werden, desto weiter deren zugeordnetes bestimmtes geografisches Gebiet von der Basisstation entfernt ist. Dadurch können Störungen anderer innerhalb derselben Funkzelle (von der Basisstation aufgespannt) und zu Nachbar-Funkzellen (von anderen Basisstationen aufgespannt) vermieden bzw. verringert werden.

Gemäß einer weiteren vorteilhaften Ausgestaltung kann die Mobilstation als ein Mobilfunkgerät bzw. ein Mobiltelefon ausgebildet sein, sie kann jedoch auch als eine Datenverarbeitungsanlage oder ein Computer mit einem Mobilfunkmodul bzw. Funkmodul ausgeführt sein.

Gemäß einer vorteilhaften Ausgestaltung kann das die Basisstation und die Mobilstation umfassende Mobilfunknetz gemäß dem GSM(Global System for Mobile Communication)-Standard oder dem UMTS(Universal Mobile Telecommunication System)-Standard arbeiten.

Gemäß einem weiteren Aspekt der Erfindung wird eine Mobilfunkanordnung zum Übertragen von Dienst-Daten innerhalb einem Mobilfunknetz geschaffen, die insbesondere zum Durchführen eines oben beschriebenen Verfahrens geeignet ist. Die Mobilfunkanordnung umfasst dabei eine Basisstation zum Abstrahlen von Dienst-Daten, die eine Mehrzahl von ortsbezogenen Dienst-Informationen (Nutz- Informationen sowie SteuerInformationen) aufweisen, welche jeweils einem bestimmten geografischen Gebiet zugeordnet sind, wobei die jeweiligen ortsbezogenen Dienst-Informationen in einer vorbestimmten zeitlichen Struktur zusammen mit einer diese zeitliche Struktur beschreibenden Planungs-Information übertragen werden, wobei die Planungs-Information und die ortsbezogenen Dienst-Informationen zeitlich aufeinander folgend in den Dienst-Daten vorgesehen sind und jeweils ein vorbestimmtes Übertragungsintervall umfassen. Ferner umfasst die Mobilfunkanordnung eine Mobilstation, die dafür ausgelegt ist, ihren momentanen Aufenthaltsort innerhalb der von der Basisstation aufgespannten Mobilfunkzelle zu ermitteln, und die dafür ausgelegt ist, die in den Dienst-Daten der Basisstation vorgesehene Planungs-Information zu analysieren und diejenigen ortsbezogenen Dienst-Informationen zu verarbeiten, die dem geografischen Gebiet entsprechen, in dem sich der ermittelte Aufenthaltsort der Mobilstation befindet.

Bevorzugte Ausführungsformen der vorliegenden Erfindung werden nachfolgend Bezug nehmend auf die beiliegenden Zeichnungen näher erläutert. Es zeigen:

Figur 1 eine schematische Darstellung einer von einer Mobilstation aufgespannten Mobilfunkzelle zur Erläuterung einer Ausführungsform der Erfindung;

Figur 2 die zeitliche Struktur von von einer Basisstation abgestrahlten Dienst- Daten mit DienstInformationen und einer jeweiligen diese Informationen beschreibenden Planungs-Information gemäß einer bevorzugten Ausführungsform der Erfindung;

Figur 3 eine beispielhafte Planungs-Information in Form einer Tabelle, in der in Abhängigkeit von einem geografischen Gebiet der Zeitpunkt der Übertragung der für das geografische Gebiet relevanten DienstInformation dargestellt ist;

Figur 4 eine Darstellung der Sendeleistung von PlanungsInformation sowie der einzelnen DienstInformationen gemäß einer weiteren Ausführungsform der Erfindung.

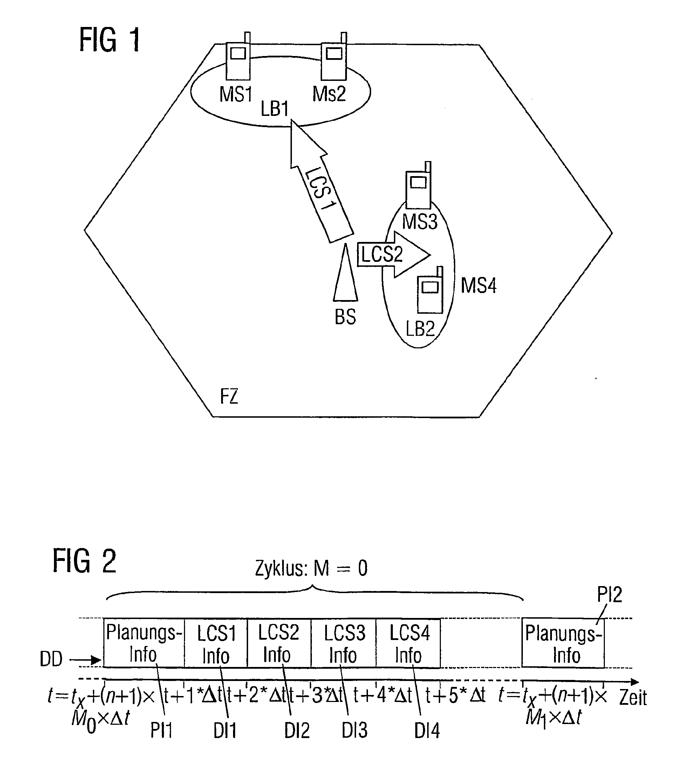

Zunächst sei auf Figur 1 verwiesen, in der ein Mobilfunknetz, genauer gesagt, ein Ausschnitt eines Mobilfunknetzes in Form einer von einer Basisstation BS aufgespannten Mobilfunkzelle FZ gezeigt ist. Es sei angenommen, dass das Mobilfunknetz bzw. die Basisstation BS sowie sich innerhalb der Mobilfunkzelle FZ befindliche Mobilstationen MS1, MS2, MS3 und MS4, die mit der Basisstation in einer Funkkommunikationsverbindung stehen, nach dem UMTS-Standard arbeiten. Figur 1 zeigt dabei eine Momentaufnahme, bei der sich die Mobilstation MS1 und MS2 in einem geografischen Gebiet LB1 befinden, während sich die Mobilstationen MS3 und MS4 in dem geografischen Gebiet LB2 befinden. Die Basisstation BS ist dabei in der Lage, ortsbezogene Dienste für die jeweiligen geografischen Gebiete innerhalb der Mobilfunkzelle FZ bereitzustellen. So ist sie dafür ausgelegt, einen ortsbezogenen Dienst LCS1 bereitzustellen, der Informationen bereitstellt, welche für das geografische Gebiet LB1 relevant sind, während die Basisstation ferner einen ortsbezogenen Dienst LCS2 bereitstellt, der relevante Informationen für das geografische Gebiet LB2 bereitstellt.

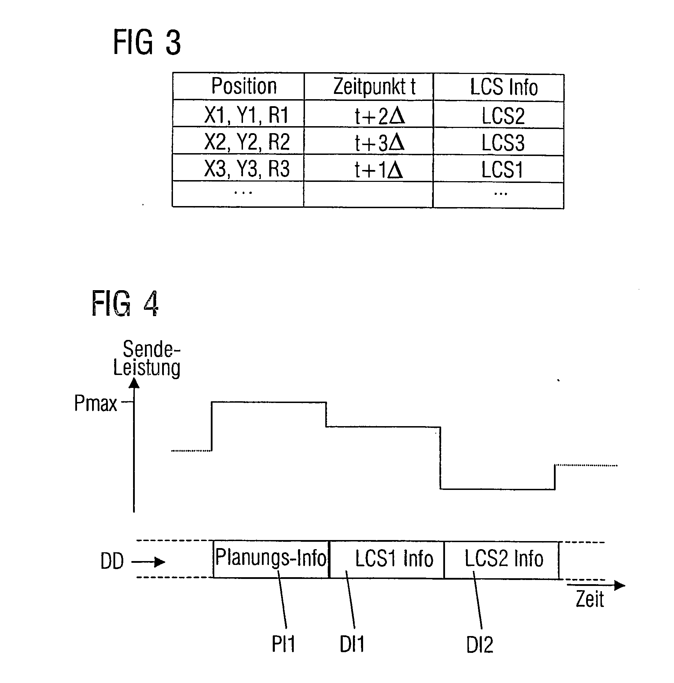

Es sei nun auf Figur 2 verwiesen, in der die zeitliche Struktur von Dienst-Daten DD dargestellt ist. Innerhalb dieser Dienst-Daten befinden sich in einer zeitlichen Aufteilung (in einer Zeitmultiplexstruktur) Planungs-Informationen (hier durch die Planungs-Informationen PI1 und PI2 repräsentiert), zwischen denen zeitlich gesehen Dienst-Informationen DI1 bis DI4 für bestimmte geografische Gebiete angeordnet sind. In den jeweiligen Planungs-Informationen ist dabei eine Beschreibung vorgesehen, welche Dienst-Informationen für welches geografische Gebiet relevant ist und zu welchem Zeitpunkt auf die Planungs-Information die jeweiligen Dienst-Informationen folgen. Eine derartige Planungs-Information ist beispielsweise in Figur 3 dargestellt. Bezug nehmend auf die in Figur 2 dargestellte zeitliche Struktur sowie auf die in Figur 1 dargestellte Funkzelle FZ ist anhand der Tabelle von Figur 3 zu sehen, dass sich an einem Aufenthaltsort mit den Koordinaten X1 und Y1 (die beispielsweise die geografische Länge und Breite angeben können) und einem Radius R1 der ortsbezogene Dienst LCS2 relevant, der ortsbezogene Dienst-Informationen für dieses geografische Gebiet (beispielsweise in Figur 1 durch das Gebiet LB2 repräsentiert) bereitstellt. Anhand der in Figur 3 gezeigten Tabelle wird ersichtlich, dass erste Dienst-Informationen des Dienstes LCS2 zum Zeitpunkt $t_p = t + 2 \cdot \Delta t$ übertragen werden. Die genaue Bedeutung der Variablen $t_p$, $t_y$ und $\Delta t$ wird im Folgenden erläutert werden.

Allgemein kann gesagt werden, dass Planungs-Informationen zu festgelegten Zeitpunkten von der Basisstation abgestrahlt werden, die sich durch die folgende Formel berechnen lassen:

$$t = t_x + (n + 1) \cdot M \cdot \Delta t \qquad (1)$$

mit $t_x$ = ein beliebiger Startzeitpunkt, n = die Anzahl von auf eine Planungs-Information folgenden Dienst-Informationen (mit n = 1 bis $\infty$), M = der Zyklus für die Übertragung von Planungs-Information (M = 0 bis $\infty$), und $\Delta t$ = der Zeitraster bzw. das Übertragungszeitintervall, das einer Planungs-Information bzw. den jeweiligen ortsbezogenen Dienst-Informationen zugeordnet wird.

Wie es in Figur 2 zu sehen ist, ist ein erster Übertragungszyklus M1 dargestellt, der die Planungs-Information PI1 sowie die folgenden ortsbezogenen Dienst-Informationen DI1, DI2, DI3 usw. der ortsbezogenen Dienste LCS1, LCS2 und LCS3 umfasst. Für den Zeitpunkt, wann die Dienst-Information eines bestimmten Dienstes abgestrahlt wird, ergibt sich die entsprechende Formel:

$$t_p = t_x + (n+1) \cdot M \cdot \Delta t + p \cdot \Delta t \qquad (2)$$

wobei p eine natürliche Zahl darstellt und als Bezeichnung für den p-ten Dienst bzw. dessen Dienst-Information steht. Kombiniert man Gleichung (2) mit Gleichung (1) so erhält man schließlich die bereits oben dargestellte Formel $t_p = t + p \cdot \Delta t$, nur jetzt in allgemeiner Form (anstelle dem oben dargestellten Spezialfall p = 2).

Nach der Beschreibung der Struktur von Dienst-Informationen, die von der Basisstation BS von Figur 1 abgestrahlt werden und für jeweilige geografische Gebiete innerhalb der Mobilfunkzelle FZ relevante ortsbezogene Dienst-Informationen aufweisen, soll nun ein Verfahren zur Übertragung dieser Dienst-Daten von der Basisstation BS zu den jeweiligen Mobilstationen MS1 bis MS4 beschrieben werden.

Zunächst ist es nötig, dass die Mobilstationen MS1 bis MS4 den momentanen Aufenthaltsort bestimmen. Dies kann beispielsweise mittels eines in den Mobilstationen eingebauten GPS-Moduls geschehen. Die Basisstation, die in einer Kommunikationsverbindung mit den jeweiligen Mobilstationen MS1 bis MS4 steht, überträgt an die Mobilstationen regelmäßig Dienst-Daten, in einer Form wie sie beispielsweise in Figur 2 gezeigt ist. Die jeweiligen Mobilstationen MS1 bis MS4, die wie bereits erwähnt, den momentanen Aufenthaltsort bestimmt haben, analysieren nun die in den Dienst-Daten vorgesehene Planungs-Information, um herauszufinden, zu welchen Zeitpunkten folgend auf die Planungs-Information ortsbezogene Dienst-Informationen (als Sammelruf) übertragen ("gebroadcastet") werden, die dem geografischen Gebiet entsprechen, in dem sich der ermittelte Aufenthaltsort der jeweiligen Mobilstationen befindet. Haben die Mobilstationen den Zeitpunkt der für sie relevanten ortsbezogenen Dienst-Informationen ermittelt, so brauchen sie lediglich zu diesem Zeitpunkt die für sie relevanten ortsbezogenen Dienst-Informationen empfangen bzw. auslesen und dann verarbeiten. Somit ist der Signalverarbeitungsaufwand der Mobilstation MS1 bis MS4 minimiert und auf Grund des verringerten Stromverbrauchs die Batteriestandzeit verlängert.

Es ist nun möglich, die gesamten Dienst-Informationen, d. h. die jeweiligen Planungs-Information und die ortsbezogenen Dienst-Informationen mit gleicher Sendeleistung von der Basisstation BS abzustrahlen, es ist jedoch gemäß einer vorteilhaften Ausführungsform auch möglich, eine Sendeleistungsanpassung der jeweiligen zu übertragenden Informationen durchzuführen, wie es beispielhaft in Figur 4 gezeigt ist.

In horizontaler Richtung sind dabei die jeweiligen zu übertragenden Informationen (Planungs-Information PI1 und Dienst-Informationen DI1 und DI2) gezeigt, während in vertikaler Richtung die jeweilige den Informationen zugeordnete Sendeleistung aufgetragen ist. Gemäß dieser vorteilhaften Ausführung sollen die Planungs-Informationen (wie die dargestellte Planungs-Information PI1) immer mit maximaler Sendeleistung (Pmax) gesendet werden, damit auch eine Mobilstation am Rand der Funkzelle FZ diese Planungs-Informationen empfangen kann.

Die ortsbezogenen Dienst-Informationen sollen hingegen mit einer Sendeleistung abgestrahlt werden, die an die Entfernung des geografischen Gebiets, das den jeweiligen ortsbezogenen Dienst-Informationen zugeordnet ist, angepasst ist. Je weiter sich ein geografisches Gebiet von der Basisstation BS entfernt befindet, desto höher muss die Sendeleistung für die diesem geografischen Gebiet entsprechenden ortsbezogenen Dienst-Informationen sein. Wie es beispielsweise in Figur 1 gezeigt ist, liegt das geografische Gebiet LB1, in dem die von dem Dienst LCS1 bereitgestellten Dienst-Informationen relevant sind, näher am Zellenrand der Funkzelle FZ (und somit weiter weg von der Basisstation BS) als das geografische Gebiet LB2, in dem die von dem Dienst LCS2 bereitgestellten Dienst-Informationen relevant sind. Die Sendeleistung für ortsbezogene Dienst-Informationen des Dienstes LCS1 muss daher höher sein als die Sendeleistung für die Dienst-Informationen des Dienstes LCS2, wie es in Figur 4 gezeigt ist.

Im Folgenden soll nun ein vorteilhaftes Anwendungsbeispiel des oben dargestellten Verfahrens zur Übertragung von Dienst-Daten erläutert werden. Es sei dabei davon ausgegangen, dass in einem Kraftfahrzeug, wie einem Automobil, eine Datenverarbeitungsanlage in Form eines Fahrzeugcomputers, vorgesehen ist, der mit einer Positionserfassungseinrichtung zum Bestimmen des momentanen Aufenthaltsorts des Kraftfahrzeugs sowie mit einem Funkmodul bzw. Mobilfunkmodul zum Herstellen einer Kommunikationsverbindung mit einer eine Funkzelle aufspannenden Basisstation verbunden ist. Die Positionserfassungseinrichtung kann dabei ein GPS-Modul sein. Es ist auch denkbar, dass die Positionserfassungseinrichtung sowie das Funkmodul in einem Mobilfunkgerät bzw. Mobiltelefon vorgesehen ist, das mit der Datenverarbeitungsanlage bzw. dem Fahrzeugcomputer verbunden ist. In Anlehnung an die in Figur 1 dargestellte Funkzelle FZ sei angenommen, dass sich das Kraftfahrzeug mit seinem Funkmodul oder Mobilfunkmodul innerhalb des geografischen Gebiets LB1 befindet, in dem die erlaubte Höchstgeschwindigkeit beispielsweise 100 km/h beträgt.

Die Datenverarbeitungsanlage des Kraftfahrzeugs kann nun mittels des verbundenen GPS-Moduls den momentanen Aufenthaltsort bestimmen, der hier als das geografische Gebiet LB1 angenommen wurde. Ferner kann die Datenverarbeitungsanlage mittels des verbundenen Funkmoduls bzw. Mobilfunkmoduls Dienst-Daten von der Basisstation BS empfangen, wobei die Basisstation im vorliegenden Fall Dienst-Daten mit Dienst-Informationen bezüglich der erlaubten Höchstgeschwindigkeit in einem den Dienst-Informationen zugeordneten geografischen Gebiet bereitstellt. Nachdem die Datenverarbeitungsanlage des Fahrzeugs nun die Dienst-Daten empfangen hat, wertet sie die darin enthaltene Planungs-Information aus, um schließlich festzustellen, zu welchen Zeitpunkten zeitlich auf die Planungs-Information folgend die Dienst-Informationen gesendet werden, die für den momentanen Aufenthaltsort des Kraftfahrzeugs relevant sind. Da die Datenverarbeitungsanlage den richtigen Zeitpunkt ermittelt und die relevanten Dienst-Informationen empfängt bzw. verarbeitet, kann sie diese Informationen grafisch aufbereiten und auf einem Display dem Fahrer des Kraftfahrzeugs zur Verfügung stellen, oder auch akustisch über einen Lautsprecher ausgeben. Insbesondere kann durch einen Vergleich der erlaubten Höchstgeschwindigkeit mit der tatsächlich gefahrenen Geschwindigkeit des Fahrzeugs dem Fahrer signalisiert werden, wenn seine Geschwindigkeit zu hoch ist, wodurch die Sicherheit im Straßenverkehr verbessert und die Gefahr unerlaubter Handlungen des Fahrers verringert werden.

Neben der erlaubten Höchstgeschwindigkeit für ein geografisches Gebiet können der Datenverarbeitungsanlage eines Fahrzeugs auch beliebige weitere Informationen mitgeteilt werden, wie beispielsweise dass auf verschiedenen Straßen in dem geografischen Gebiet, in dem sich das Fahrzeug momentan befindet, Stau herrscht usw.

Zusammenfassend können also die dem gerade dargestellten bevorzugten Ausführungsformen zugrunde liegenden Prinzipien derart dargestellt werden, dass eine eine Funkzelle oder Mobilfunkzelle aufspannende Basisstation ortsbezogene Dienst-Informationen in der Funkzelle oder in Teilen der Funkzelle (z. B. Sektoren der Funkzelle) überträgt bzw. broadcastet. Dienst-Informationen, welche an bestimmten geografischen Gebieten relevant sind, sollen dabei zu unterschiedlichen Zeitpunkten gesendet werden (Zeit-Multiplex), so dass es einer Mobilstation möglich ist, nur die Dienst-Informationen zu lesen, welche an ihrem momentanen Standort bzw. Aufenthaltsort relevant sind.

Zur Zuordnung von Aufenthaltsort zu Sendezeitpunkt soll einer Mobilstation eine Liste bzw. Tabelle zugesandt werden. Dies kann in Form einer Planungs-Information geschehen, die zu festgelegten Zeitpunkten in der ganzen Funkzelle an alle darin befindlichen und in Kommunikationsverbindung mit der Basisstation befindlichen Mobilstationen gebroadcastet bzw. übertragen wird.

Vorteilhafter Weise soll weiterhin die Sendeleistung der abgestrahlten Dienst-Daten derart angepasst werden, dass die in den Dienst-Daten enthaltenen Dienst-Informationen, in den geografischen Gebieten, für die sie relevant sind, zu empfangen sind. Das heißt, dass die Dienst-Informationen für geografische Gebiete, welche nahe an der Basisstation liegen, mit geringerer Leistung gesendet werden. Es sollen dadurch Störungen anderer Funkkanäle innerhalb der selben Funkzelle und zu Nachbar-Funkzellen vermieden bzw. reduziert werden.

## Patentansprüche

1. Verfahren zum Übertragung von Dienst-Daten in einem Mobilfunknetz (FZ) von einer Basisstation (BS) zu einer Mobilstation (MS1, MS2, MS3, MS4), mit folgenden Schritten:

   - Ermitteln des Aufenthaltsorts der Mobilstation;
   - Übertragen der Dienst-Daten, die eine Mehrzahl von ortsbezogenen Dienst-Informationen (DI1, DI2, DI3, DI4) aufweisen, welche jeweils einem bestimmten geografischen Gebiet (LB1, LB2) zugeordnet sind, wobei die jeweiligen ortsbezogenen Dienst-Informationen in einer vorbestimmten zeitlichen Struktur zusammen mit einer diese zeitliche Struktur der ortsbezogenen Dienst-Informationen beschreibenden Planungs-Information übertragen werden, wobei die Planungs-Information (PI1, PI2) und die ortsbezogenen Dienst-Informationen (DI1, DI2, DI3, DI4) zeitlich aufeinander folgend in den Dienst-Daten (DD) vorgesehen sind und jeweils ein vorbestimmtes Übertragungszeitintervall ($\Delta t$) umfassen;
- Analysieren der in den Dienst-Daten (DD) übertragenen Planungs-Information (PI1, PI2) durch die Mobilstation und Verarbeiten derjenigen ortsbezogenen Dienst-Informationen, die dem geografischen Gebiet, in dem sich der ermittelte Aufenthaltsort der Mobilstation befindet, zugeordnet sind.

2. Verfahren nach Anspruch 1, bei dem der Aufenthaltsort von der Mobilstation mittels GPS, einem Cell-ID-Verfahren oder einem E-OTD-Verfahren bestimmt wird.

3. Verfahren nach einem der Ansprüche 1 bis 2, bei dem sich die Zeitpunkte (t) an denen Planungs-Informationen übertragenen werden, gemäß folgender Formel berechnen:

$$t = t_x + (n + 1) \cdot M \cdot \Delta t ,$$

mit $t_x$ = ein Startzeitpunkt der Übertragung der Dienst-Daten, n = die Anzahl der ortsbezogenen Dienst-Informationen in einem Übertragungszyklus von Dienst-Daten,
M = ein Zyklus für die Übertragung der Planungs-Information samt folgender ortsbezogener Dienst-Informationen,
$\Delta t$ = ein vorbestimmtes Übertragungszeitintervall für die Planungs-Information und die ortsbezogenen Dienst-Informationen.

4. Verfahren nach einem der Ansprüche 1 bis 3, bei dem die Planungs-Information (PI1, PI2) und die ortsbezogenen Dienst-Informationen (DI1, DI2, DI3, DI4) mit unterschiedlichen Sendeleistungen von der Basisstation (BS) abgestrahlt werden.

5. Verfahren nach Anspruch 4, bei dem die Planungs-Information (PI1, PI2) mit maximaler Sendeleistung abgestrahlt werden, während die ortsbezogenen Dienst-Informationen (DI1, DI2, DI3, DI4) mit umso größerer Sendeleistung abgestrahlt werden, desto weiter deren zugeordnetes bestimmtes geografisches Gebiet (LB1, LB2) von der Basisstation (BS) entfernt ist.

6. Verfahren nach einem der Ansprüche 1 bis 5, bei dem die Mobilstation (MS1, MS2, MS3, MS4) als ein Mobilfunkgerät oder ein Computer mit Funkmodul ausgebildet ist.

7. Verfahren nach einem der Ansprüche 1 bis 6, bei dem das Mobilfunknetz gemäß dem GSM-Standard oder dem UMTS-Standard arbeitet.

8. Mobilfunkanordnung zum Übertragen von Dienst-Daten, insbesondere zum Durchführen eines Verfahrens nach einem der Ansprüche 1 bis 7, mit folgenden Merkmalen:

- einer Basisstation (BS) zum Abstrahlen von Dienst-Daten (DD), die eine Mehrzahl von ortsbezogenen Dienst-Informationen (DI1, DI2, DI3, DI4) aufweisen, welche jeweils einem bestimmten geografischen Gebiet (LB1, LB2) zugeordnet sind, wobei die jeweiligen ortsbezogenen Dienst-Informationen in eine vorbestimmte zeitliche Struktur zusammen mit einer die zeitliche Struktur der ortsbezogenen Dienst-Informationen beschreibenden Planungs-Information abgestrahlt werden, wobei die Planungs-Information (PI1, PI2) und die ortsbezogenen Dienst-Informationen (DI1, DI2, DI3, DI4) zeitlich aufeinander folgend in den Dienst-Daten (DD) vorgesehen sind und jeweils ein vorbestimmtes Übertragungszeitintervall ($\Delta t$) umfassen;
- einer Mobilstation (MS) zum Ermitteln des Aufenthaltsorts der Mobilstation innerhalb der von der Basisstation (BS) aufgespannten Funkzelle (FZ) und zum Analysieren der in den Dienst-Daten übertragenen Planungs-Information, sowie zum Verarbeiten derjenigen ortsbezogenen Dienst-Informationen, die dem geografischen Gebiet, in dem sich der ermittelte Aufenthaltsort der Mobilstation befindet, zugeordnet sind.

9. Mobilfunkanordnung nach Anspruch 8, bei der die Mobilstation als ein Mobilfunkgerät oder ein Computer mit Funkmodul ausgebildet ist.

## Claims

1. Method for transmitting service data in a mobile radio network (FZ) from a base station (BS) to a mobile station (MS1, MS2, MS3, MS4), said method comprising the following steps:

   - Determining the location of the mobile station;
   - Transmitting the service data having a plurality of items of location-related service information (DI1, DI2, DI3, DI4) which are each assigned to a specific geographical area (LB1, LB2), wherein the respective items of location-specific service information are transmitted in a predetermined chronological structure together with planning information describing this chronological structure of the items of location-related service information, wherein the planning information (PI1, PI2) and the items of location-related service information (DI1, DI2, DI3, DI4) are provided one after the other chronologically in the service data (DD) and comprise in each case a predetermined transmission time interval (At);
   - Analysing by the mobile station of the planning information (PI1, PI2) transmitted in the service data (DD) and processing said items of location-related service information assigned to the geographical area covering the determined location of the mobile station.

2. Method according to claim 1, wherein the location of the mobile station is determined by means of GPS, a cell ID method or an E-OTD method.

3. Method according to one of claims 1 to 2, wherein the points in time (t) at which items of planning information are transmitted are calculated using the following formula:

$$t = t_X + (n+1) \cdot M \cdot \Delta t \text{ ,}$$

   where $t_X$ = a start time point for the transmission of the service data,
   n = the number of location-related items of service information in a service data transmission cycle,
   M = a cycle for the transmission of the planning information together with the following items of location-related service information.
   $\Delta t$ = a predetermined transmission time interval for the planning information and the items of location-related service information.

4. Method according to one of claims 1 to 3, wherein the planning information (PI1, PI2) and the items of location-related service information (DI1, DI2, DI3, DI4) are output from the base station (BS) with varying transmitter powers.

5. Method according to claim 4, wherein the items of planning information (PI1, PI2) are output with maximum transmitter power while the items of location-related service information (DI1, DI2, DI3, DI4) are output with transmitter power which is all the greater the further its assigned specific geographical area (LB1, LB2) is from the base station (BS).

6. Method according to one of claims 1 to 5, wherein the mobile station (MS1, MS2, MS3, MS4) is embodied as a mobile radio device or a computer with a radio module.

7. Method according to one of claims 1 to 6, wherein the mobile radio network operates in accordance with the GSM standard or the UMTS standard.

8. Mobile radio arrangement for transmitting service data, in particular for carrying out a method according to one of claims 1 to 7, with the following features:

   - a base station (BS) for outputting service data (DD) having a plurality of items of location-related service information (DI1, DI2, DI3, DI4) which are each assigned to a specific geographical area (LB1, LB2), wherein the respective items of location-specific service information are output in a predetermined chronological structure together with planning information describing the chronological structure of the items of location-related service information, wherein the planning information (PI1, PI2) and the items of location-related service information (DI1, DI2, DI3, DI4) are provided one after the other chronologically in the service data (DD) and comprise in each case a predefined transmission time interval (At);
- a mobile station (MS) for determining the location of the mobile station within the radio cell (FZ) defined by the base station (BS) and for analysing the planning information transmitted in the service data, as well as for processing said items of location-related service information assigned to the geographical area covering the determined location of the mobile station.

**9.** Mobile radio arrangement according to claim 8,
wherein the mobile station is embodied as a mobile radio device or a computer with radio module.

**Revendications**

**1.** Procédé pour la transmission de données de service dans un réseau de téléphonie mobile (FZ) d'une station de base (BS) à une station mobile (MS1, MS2, MS3, MS4), comprenant les étapes suivantes :

- détermination du lieu de séjour de la station mobile ;
- transmission des données de service, qui présentent une pluralité d'informations de service (DI1, DI2, DI3, DI4) spécifiques au lieu, lesquelles sont attribuées respectivement à une zone (LB1, LB2) géographique définie, les informations de service respectives et spécifiques au lieu étant transmises dans une structure dans le temps prédéfinie conjointement avec une information de planification décrivant cette structure dans le temps des informations de service spécifiques au lieu, l'information de planification (PI1, PI2) et les informations de service (DI1, DI2, DI3, DI4) spécifiques au lieu étant prévues de façon successive dans les données de service (DD) et comprenant à chaque fois un intervalle de temps de transmission ($\Delta t$) prédéfini ;
- analyse de l'information de planification (PI1, PI2) transmise dans les données de service (DD) par la station mobile et traitement des informations de service spécifiques au lieu qui sont attribuées à la zone géographique dans laquelle se trouve le lieu de séjour défini de la station mobile.

**2.** Procédé selon la revendication 1,
dans lequel le lieu de séjour de la station de séjour est déterminé par GPS, un procédé Cell-ID ou un procédé E-OTD.

**3.** Procédé selon l'une quelconque des revendications 1 à 2,
dans lequel les moments (t) où des informations de planification sont transmises se calculent selon la formule suivante :

$$t = t_x + (n+1) \cdot M \cdot \Delta t,$$

avec

$t_x$ = un moment de démarrage de la transmission des données de service,
n = le nombre des informations de service spécifiques au lieu dans un cycle de transmission de données de service,
M = un cycle pour la transmission de l'information de planification avec les informations de service suivantes spécifiques au lieu,
$\Delta t$ = un intervalle de temps de transmission prédéfini pour l'information de planification et les informations de service spécifiques au lieu.

**4.** Procédé selon l'une quelconque des revendications 1 à 3,
dans lequel l'information de planification (PI1, PI2) et les informations de service (DI1, DI2 DI3, DI4) spécifiques au lieu sont diffusées avec des puissances d'émission différentes par la station de base (BS).

**5.** Procédé selon la revendication 4,
dans lequel les informations de planification (PI1, PI2) sont diffusées avec une puissance d'émission maximale, alors que les informations de service (DI1, DI2, DI3, DI4) spécifiques au lieu sont diffusées avec une puissance d'émission d'autant plus grande que leur zone (LB1, LB2) géographique définie attribuée est plus éloignée de la station de base (BS).

**6.** Procédé selon l'une quelconque des revendications 1 à 5,
dans lequel la station mobile (MS1, MS2, MS3, MS4) est conçue sous la forme d'un appareil de téléphonie mobile ou d'un ordinateur avec module radio.

**7.** Procédé selon l'une quelconque des revendications 1 à 6,
dans lequel le réseau de téléphonie mobile travaille selon le standard GSM ou le standard UMTS.

**8.** Agencement de téléphonie mobile pour la transmission de données de service, en particulier pour la mise en oeuvre d'un procédé selon l'une quelconque des revendications 1 à 7, comprenant les caractéristiques suivantes :

- une station de base (BS) pour la diffusion de données de service (DD), qui présentent une pluralité d'informations de service (DI1, DI2, DI3, DI4) spécifiques au lieu, lesquelles sont attribuées à chaque fois à une zone (LB1, LB2) géographique définie, les informations de service respectives et spécifiques au lieu étant diffusées dans une structure dans le temps prédéfinie en même temps qu'une information de planification décrivant la structure de temps des informations de service spécifiques au lieu, l'information de planification (PI1, PI2) et les informations de service (DI1, DI2, DI3, DI4) spécifiques au lieu étant prévues de façon successive dans les données de service (DD) et comprenant à chaque fois un intervalle de temps de transmission ($\Delta t$) prédéfini ;
- une station mobile (MS) pour la détermination du lieu de séjour de la station mobile à l'intérieur de la cellule radio (FZ) positionnée par la station de base (BS) et pour l'analyse de l'information de planification transmise dans les données de service, ainsi que pour le traitement des informations de service spécifiques au lieu, qui sont attribuées à la zone géographique dans laquelle se trouve le lieu de séjour déterminé de la station mobile.

**9.** Agencement de téléphonie mobile selon la revendication 8,
dans lequel la station mobile est conçue sous forme d'un appareil de téléphonie mobile ou d'un ordinateur avec module radio.

FIG 1

MS1
Ms2
LB1
LCS1
MS3
LCS2
MS4
BS
LB2
FZ

FIG 2

Zyklus: M = 0
PI2
Planungs-Info
LCS1 Info
LCS2 Info
LCS3 Info
LCS4 Info
Planungs-Info
DD
t=tX+(n+1)× M0×Δt
t+1*Δt
t+2*Δt
t+3*Δt
t+4*Δt
t+5*Δt
t=tX+(n+1)× M1×Δt
Zeit
PI1
DI1
DI2
DI3
DI4

FIG 3

| Position | Zeitpunkt t | LCS Info |
|---|---|---|
| X1, Y1, R1 | t+2Δ | LCS2 |
| X2, Y2, R2 | t+3Δ | LCS3 |
| X3, Y3, R3 | t+1Δ | LCS1 |
| ... | | ... |

FIG 4

Sende-
Leistung
Pmax
DD
Planungs-Info
LCS1 Info
LCS2 Info
Zeit
PI1
DI1
DI2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6529740 B1
- US 20030003909 A1